Europäisches Patentamt

European Patent Office

Office européen des brevets

(19)

(11) Veröffentlichungsnummer : **0 027 210**
**B1**

(12) **EUROPÄISCHE PATENTSCHRIFT**

(45) Veröffentlichungstag der Patentschrift :
08.02.84

(21) Anmeldenummer : 80105945.2

(22) Anmeldetag : 01.10.80

(51) Int. Cl.³ : **A 01 J   5/08**, A 01 J   5/06

(54) Zitzengummi.

(30) Priorität : 10.10.79 DE 2941150

(43) Veröffentlichungstag der Anmeldung :
22.04.81 Patentblatt 81/16

(45) Bekanntmachung des Hinweises auf die Patenterteilung : 08.02.84 Patentblatt 84/06

(84) Benannte Vertragsstaaten :
AT FR GB IT NL SE

(56) Entgegenhaltungen :
DD-A-    94 518
DE-C-   936 724
DE-C- 1 036 562
US-A- 2 744 496

(73) Patentinhaber : BIO-MELKTECHNIK SWISS Hoefelmayr & Co.
Steinwichslenstrasse 20
CH-9052 Niederteufen (CH)

(72) Erfinder : Hoefelmayr, Tilmann, Dr.
Steinwichslenstrasse 20
CH-9052 Niederteufen AR (CH)
Erfinder : Maier, Jakob
Schelmengriesstrasse 1
D-8939 Türkheim/Allgäu (DE)

(74) Vertreter : Patentanwälte Dipl.-Ing. A. Grünecker,
Dr.-Ing. H. Kinkeidey, Dr.-Ing. W. Stockmair,
Dr. rer. nat. K. Schumann, Dipl.-Ing. P.H. Jakob, Dr.
rer. nat. G. Bezold Maximilianstrasse 58
D-8000 München 22 (DE)

## Zitzengummi

Die Erfindung betrifft ein Zitzengummi mit einem zu einer Längsachse rotationssymmetrischen Kopfteil, der eine Einführungsöffnung für die Zitze sowie einen Halterand zum Übergreifen einer Melkbecherhülse aufweist, wobei die den Innenraum des Kopfteils umschließende Wandung derart ausgebildet ist, daß sich der Innenraum von der Einführöffnung der Zitze in Richtung der Längsachse fortschreitend zunächst radial erweitert und nach Erreichen eines maximalen Durchmessers wieder bis zu einem Übergang in einen mit dem Kopfteil zusammenhängenden, leicht konischen oder zylindrischen, flexiblen Saugstutzen hin verjüngt, wobei die Wand des Kopfteils zwischen der Einführöffnung und dem Übergang zum Saugstutzen einen versteiften Wandungsteil und zwischen diesem versteiften Wandungsteil und dem Halterand in Höhe einer zu der Längsachse senkrechten Querebene einen bei einer in Richtung der Längsachse des Zitzengummis auf den Rand der Einführöffnung für die Zitze wirkenden Kraft flexibleren und als ein erstes Federgelenk wirkendes Wandungsteil aufweist.

Der Zitzengummi bildet bei der Melkmaschine die Kontaktstelle zwischen dem zu melkenden Tier und der Melkmaschine und stellt somit den schwierigsten Teil der gesamten Melkmaschine dar. Besondere Probleme stellen sich hierbei insbesondere in bezug auf den Kopfteil eines Zitzengummis. Ein solcher Kopfteil muß wenigstens zwei Hauptbedingungen erfüllen, d. h. er muß einerseits eine gute Abdichtung an der Zitze gewährleisten und andererseits sich an die verschiedensten Zitzengrößen gut anpassen können, ohne einen zu großen Druck auf die Zitze auszuüben. Eine besonders gute Abdichtung ist erforderlich, um den Eintritt von Leckluft zu vermeiden und um ein hierdurch zumeist bedingtes Abfallen des gesamten Melkbechers von der Zitze zu verhindern. Das Problem des Abfallens ist besonders aktuell, wenn das Melkvakuum relativ niedrig eingestellt wird. Aber gerade dieses niedrige Vakuum hat nach neueren wissenschaftlichen Erkenntnissen wesentliche melkphysiologische und von der Zitzenbehandlung her klare Vorteile gegenüber einem hohen Melkvakuum. Der meist sporadische Eintritt von Leckluft in den Kopfteil des Zitzengummis bedeutet einen ungewollten Abfall des für den Melkvorgang notwendigen Vakuums. Der durch den Eintritt von Leckluft bedingte Vakuumabfall kann nun aber nicht einfach dadurch ausgeglichen werden, daß die Melkmaschine insgesamt mit einer höheren Vakuumpumpenleistung betrieben wird, denn das Auftreten von Leckluft an sich bedeutet bereits eine Beeinträchtigung der Milchqualität, da sich durch die eintretende Leckluft Turbulenzen in der Milch bilden, wodurch die Milchstruktur geschädigt und damit die Milchqualität herabgesetzt wird. Das Eintreten von Leckluft gefährdet andererseits aber auch die Eutergesundheit. Häufig ist es nämlich der Fall, daß eine der Zitzen eines Euters bereits an Mastitis erkrankt ist. Tritt nunmehr an einer solchen erkrankten Zitze ein Lufteinbruch auf, so hat dies zur Folge, daß durch den plötzlich auftretenden Druckunterschied die Milch von der erkrankten Zitze über das Sammelstück zu den gesunden Zitzen hin gelangt. Wie in Versuchen gezeigt wurde, hat der hierbei auftretende Milchnebel eine solche Geschwindigkeit, daß der Strichkanal an den gesunden Zitzen von diesen Milchtröpfchen glatt durchschossen wird.
— Praktisch im Widerstreit mit der Bedingung einer guten Abdichtung des Kopfteils an der Zitze steht die zweite Forderung, daß das Kopfteil sich gleichzeitig an die verschiedensten Zitzengrößen, Zitzenformen, Zitzenstellungen und Zitzenzustände anpassen muß, ohne die Zitze zu beeinträchtigen. Dabei muß besonders berücksichtigt werden, daß gerade das Gewebe an der Zitzenbasis besonders empfindlich ist, d. h. gerade in diesem Bereich münden viele Nerven, die für die Stimulation des Tiers mit ausschlaggebend sind. Gerade in diesem Bereich der Zitzenbasis muß aber die Abdichtung des Kopfteiles gegen die Zitze erfolgen. Als eine Hauptforderung ist deshalb die Forderung anzusehen, daß kein zu starker Druck an der Zitzenbasis in Höhe des Fürstenbergschen Venenringes ausgeübt werden darf, da sich ansonsten dieser Ring frühzeitig schließt und damit die Nachgemelksmenge wesentlich erhöht. Da das Nachmelken den größten Teil der erforderlichen Routinearbeit pro Kuh ausmacht, bedeutet eine erhöhte Nachgemelksmenge eine wesentliche Beeinträchtigung der Wirtschaftlichkeit. Noch wichtiger ist jedoch, daß sich eine schlechte Euterentleerung auf den Verlauf der Laktationskurve, d. h. auf die Gesamtproduktionsleistung der Kuh sehr negativ auswirkt. Dazu kommt, daß schlecht entleerte Euter in erhöhtem Maße mastitisgefährdet sind. Zusammenfassend muß also das Zitzengummi die Forderung erfüllen, daß es einerseits eine optimale Dichtung Haftung des Melkbechers an der Zitze und andererseits eine schnelle, schonende, möglichst vollständige und möglichst selbsttätige Euterentleerung ermöglicht.

Es sind bereits die verschiedensten Zitzengummis bekanntgeworden, die diese Forderungen entweder überhaupt nicht oder nur unzureichend erfüllen. Eine gute Anpassungsmöglichkeit an Zitzen verschiedener Größe bietet bereits der aus der US-A-2 744 496 bekanntgewordene Großkopf-Flachkopf-Zitzengummi. Bei diesem bekannten Zitzengummi wird der obere Teil des Kopfteils durch eine ebene Ringlippe mit verhältnismäßig großem Außendurchmesser gebildet. Diese große (in einer Anfangsstellung flache oder ebene) Dichtlippe bildet den Vorteil, daß sie beim Einführen von verschiedenen dicken Zitzen in die Einführöffnung entsprechend nach einwärts in den Kopfteil hineingebogen wird, wobei die auf ihrem Außenrand gehaltene Dichtlippe aufgrund ihres verhältnismäßig großen Außendurchmessers leicht nach einwärts gebogen werden kann, wodurch die die Zitze umschließende Einführöffnung erweitert wird, so daß auch bei dickeren Zitzen nur ein geringer radialer Druck auf die Zitze ausgeübt wird. Ein solcher Flachkopf mit einem verhältnismäßig großem Außendurchmesser hat jedoch wesentliche Nachteile. Damit die Vorteile der einen großen Außendurchmesser aufweisenden Ringlippe beim Einführen einer Zitze überhaupt wirksam werden kann, muß das Kopfteil eine verhältnismäßig große axiale Bauhöhe haben, damit die Ringlippe auch ausreichend nach einwärts und abwärts bei verschieden dicken Zitzen eingeschwenkt werden kann, bevor sie an dem unteren Teil des Kopfteils zur Anlage kommt. Eine solche große Kopfhöhe hat aber andererseits den Nachteil, daß kurze Zitzen praktisch in dem Zitzengummi keinen Halt mehr finden. Außerdem können sich aufgrund des großen Durchmessers des Kopfteils gegenseitige Behinderungen der Melkbecher an dem Euter bei sehr engstehenden Zitzen ergeben, was zu einer schlechten Euterentleerung und zumeist zu einem Abfallen von Melkbechern führt. Weiter hat sich bei diesen Flachkopfbechern mit großem Durchmesser der Nachteil ergeben, daß ein Abfallen der Becher aufgrund von Leckluft bereits dann eintritt, wenn der Melkbecher nicht derart an der Zitze angehängt werden kann, daß die Ebene des Flachkopfes parallel zum Euterboden verläuft. Dies ist häufig der Fall, wenn etwa die Zitzen an dem Euter schief stehen oder auch bei sehr breiten Eutern oder Kugel- oder Stufeneutern. In diesen Fällen ist der Zitzenbecher aufgrund seines Gewichtes bestrebt, sich derart zu stellen, daß seine Längsachse senkrecht verläuft. Kommt hierbei eine Seite des oberen Randes des Kopfteils am Euterboden zur Anlage, so besteht die Gefahr, daß der Melkbecher abgekippt wird und die Ringlippe an der Zitze oder am Euterboden derart ungleichmäßig verformt wird, daß Leckluft eintreten kann. Diese Probleme sind besonders groß, wenn der Euterboden nach dem Kalben noch hart und unelastisch ist oder wenn die Zitzen besonders dünn sind.

Eine bessere Anpassungsfähigkeit an die oben angezeigten Bedingungen zeigt ein Zitzengummi mit etwa halbkugelförmigem oberen Kopfteil, wie es etwa aus der DE-C-936 724 bekanntgeworden ist. Dieser bekannte Rundkopf hat jedoch den Nachteil, daß beim Einführen von Zitzen verschiedener Dicke die die Einführöffnung umschließende Ringlippe nach einwärts geschwenkt wird. Bei diesem Einwärtsschwenken der Ringlippe wird aber im Gegensatz zu den oben anhand des Flachkopfes beschriebenen Verhältnissen die Einführöffnung nicht erweitert sondern weiter verengt, so daß die Zitze praktisch durch einen sich verengenden Ring eingeklemmt bzw. eingeschnürt wird. Zitzengummis mit einem derartigen Rundkopf sind deshalb zumeist lediglich für jeweils Zitzen einer ganz bestimmten Dicke und Form verwendbar, um einigermaßen erträgliche Melkergebnisse zu erzielen. Bei Zitzen verschiedener Dicken müssen praktisch jeweils verschiedene Zitzengummi verwandt werden. Dies ist jedoch sowohl für die praktische Melkarbeit wie auch vom wirtschaftlichen Standpunkt her gesehen untragbar.

Als logische Folgerung hat man deshalb bei dem aus der DE-C-1 036 562 bekannten Zitzengummi versucht, die Vorteile eines Rundkopfes dadurch weiter beizubehalten, daß man die obere Dichtlippe besonders elastisch ausbildet. Diese Lippe soll derart elastisch sein, daß sie nich beim Einführen verschieden dicker Zitzen leicht einrollt, ohne einen nennenswerten Druck auf die Zitze auszuüben. Dies erfordert jedoch eine äußerst schwierige Materialabstimmung für die Dichtlippe. Denn wird das Material zu hart bemessen, so tritt eine erhebliche Einschnürung der Zitze auf, während bei einem zu weichen Material die Gefahr des Abfallens des Melkbechers von der Zitze besteht. Selbst wenn jedoch auch das Material zu Anfang richtig bemessen ist, so hat sich in der Praxis herausgestellt, daß nach einigem Gebrauch sich die Materialeigenschaften verändern und die Dichtlippe meist zu weich wird, wodurch die Melkbecher erhöht dazu neigen, von der Zitze abzufallen. Ungünstig ist ein derartiges Zitzengummi insbesondere auch für kleine Zitzen, da die Möglichkeit des starken Einrollens der Dichtlippe insgesamt eine verhältnismäßig große Kopfhöhe des Kopfteils erfordert, wodurch bedingt wird, daß kleine Zitzen in dem genannten Zitzengummi keinen Halt mehr finden. Aber selbst bei solchen Zitzen die eine ausreichende Länge aufweisen, besteht der Nachteil, daß nur eine schlechte oder praktisch keine Gewebsstützung gegen die Wirkung des Vakuums über eine große Länge der Zitze vorhanden ist, da die Zitze über eine verhältnismäßig große Länge in dem hohen Kopfteil ungestützt hängt und entsprechend anschwillt. Neben den genannten Nachteilen hat sich in der Praxis herausgestellt, daß die dünne elastische einrollbare Lippe äußerst empfindlich gegen Materialrisse ist, sich sehr schnell abnützt und im rauhen Einsatz auf dem Bauernhof sehr leicht beschädigt wird.

Der vorliegenden Erfindung liegt nunmehr die Aufgabe zugrunde, den einen Rundkopf aufweisenden Zitzengummi der eingangs erwähnten Art gemäß der DE-C-103 65 62 so weiterzubilden, daß dessen Anpassungsfähigkeit an verschieden dicke Zitzen verbessert ist.

Diese Aufgabe wird erfindungsgemäß dadurch gelöst, daß ein weiterer, bei einer in Richtung der Längsachse des Zitzengummis auf den Rand der Einführöffnung für die Zitze wirkende Kraft in Bezug auf den versteiften Wandungsteil flexiblerer und als ein zweites Federgelenk wirkender Wandungsteil etwa in Höhe des maximalen Außendurchmessers des Kopfteils vorgesehen ist, daß der versteifte Wandungsteil in der sich hieran anschließenden, nach einwärts geneigten Wand des sich verjüngenden Abschnitts des Kopfteils zwischen dem ersten und dem zweiten Federgelenk ausgebildet ist, daß der versteifte Wandungsteil bei einer in Richtung der Längsachse des Zitzengummis auf den Rand der Einführöffnung für die Zitze wirkenden Kraft um das erste Federgelenk als Hebel mit etwa gleichbleibender Länge unter Vergrößerung des Außendurchmessers des Kopfteils verschwenkbar ist, daß die im Axialschnitt gesehen zwischen dem ersten und zweiten Federgelenk jeweils zwischen entsprechenden Punkten in der Wandungsmitte aufgespannte Verbindungslinie im entspannten Zustand des Zitzengummis einen Winkel von kleiner oder gleich 45° mit der Querebene einschließt und daß der mittlere Durchmesser des sich verjüngenden Kopfteils in Höhe des ersten Federgelenks kleiner als der größte Innendurchmesser der Melkbecherhülse ist.

Hierdurch wird ein besonders kleiner Rundkopf ermöglicht, der eine äußerste Anpassungsfähigkeit an extrem unterschiedliche Zitzenstellungen und Euterformen ermöglicht, ohne die Gefahr eines Abfallens oder des Eintritts von Leckluft zu verursachen. Macht man den Winkel zwischen dem ersten und zweiten Federgelenk größer als 45°, so wird der untere Teil des Kopfes, da er praktisch aus einem Kegelmantel besteht, so steif, daß bei einem axialen Druck auf den Kopf keine aktive Erweiterung des Außendurchmessers des Kopfes mehr bewirkt werden kann. Es kommt in diesem Falle somit keine aktive Verschwenkung des unteren Wandteiles des Kopfes mehr zustande. Eine eventuelle geringfügige Erweiterung des Außendurchmessers bei einer solchen Konfiguration kann höchstens durch den radialen Druck der oberen Dichtlippe beim Einführen der Zitze in die Dichtlippe zustande kommen. Dieser radiale Druck wirkt aber voll auf die Zitze zurück, so daß bei einer solchen Konfiguration somit keine Druckentlastung der Zitze mehr stattfindet. Demgegenüber wird durch die erfindungsgemäße Ausbildung, wenn der Winkel zwischen dem ersten und dem zweiten Federgelenk kleiner oder höchstens gleich 45° und insbesondere im Bereich zwischen 45° und 20° gewählt wird, erreicht, daß sich der maximale Außendurchmesser des Kopfes bei axialem Druck aktiv durch die Wirkung der beiden Federgelenke und des dazwischenliegenden relativ längsdruckfesten Wandteils aufgrund einer Verschwenkung dieses Wandteiles nach außen erweitert. Je kleiner der genannte Winkel ist, um so leichter findet somit eine solche Verschwenkung des unteren Kopfwandteiles nach außen bei einem axialen Druck auf den Kopf statt. Eine solche Druckentlastung wird insbesondere auch gegen Melkende erzielt. Mit fortschreitender Melkzeit wird die Zitze normalerweise schlaffer. Dadurch wird normalerweise die zu Anfang vorhandene Dichtwirkung zwischen der Zitze und dem Saugstutzen verringert, so daß das Vakuum im Kopfraum des Zitzengummis zunehmend ansteigt. Aufgrund der sich hierdurch verändernden Druckdifferenz zwischen der Außenatmosphäre und dem Druck im Innenraum des Kopfes wird die relativ weiche obere Ringlippe axial nach unten gedrückt.

Während aufgrund der Druckdifferenz bei einem Flachkopfgummi dieser Vorgang zu einer Erweiterung der Öffnung und somit dem Eintritt von Leckluft führt, wird bei einem Rundkopfgummi die Zitzeneinführöffnung im Gegensatz hierzu weiter verengt, so daß es bei den bisher üblichen Rundkopfgummis an sich zu einer weiteren zusätzlichen Abschnürung der Zitze kommt. Aufgrund der erfindungsgemäßen Ausbildung des Zitzengummis wird dagegen aufgrund der Verschwenkung des unteren Kopfteils nach außen eine weitere Druckentlastung bewirkt. Das Maß der gewünschten Druckentlastung kann leicht durch die Wahl der Länge des Abstandes zwischen dem ersten und dem zweiten Federgelenk und durch den Winkel zwischen der Verbindungslinie zwischen diesem Federgelenk und einer zu der Längsachse des Zitzengummis senkrecht verlaufenden Querebene erfolgen. Je größer der Abstand zwischen dem ersten und dem zweiten Federgelenk ist, desto größer ist bei sonst gleichen Verhältnissen die Entlastungswirkung. Je flacher der genannte Winkel ist, desto leichter spricht das System auf eine sich ändernde Druckdifferenz zwischen der Außenatmosphäre und dem Innendruck im Kopf bzw. auf einen axialen Druck auf das obere Kopfende des Zitzengummis an. Eine Entlastung wird somit gemäß der Erfindung gerade aufgrund der geometrischen und konstruktiven Ausgestaltung erreicht.

Das Zitzengummi kann sowohl als Zitzengummi für einen Zweiraumbecher als auch für einen Einraumbecher ausgebildet sein. Üblicherweise entfällt bei einem Zitzengummi für einen Einraumbecher der sich an das Kopfteil anschließende Saugstutzen, da in diesem Falle üblicherweise die Innenwand des Saugstutzens durch die Innenseite der Becherhülse ersetzt wird. Für den Fall eines Einraumbechers gilt zweckmäßigerweise, daß der mittlere Durchmesser des sich verjüngenden Abschnittes des Kopfteils in Höhe des ersten Federgelenks kleiner als das 1,5fache des inneren Saugstutzendurchmessers ist. Hierbei soll der Innendurchmesser des Saugstutzens derart bestimmt werden, daß dieser im Abstand des maximalen Kopfdurchmessers vom oberen Kopfende des Kopfteils aus gemessen wird. Diese Bedingung ergibt sich aus der allgemeinen Bedingung, daß der mittlere Durchmesser des sich verjüngenden Abschnitts des Kopfteils in Höhe des ersten Federgelenks kleiner als der maximale Innendurchmesser der Becherhülse ist, wenn man etwa annimmt, daß bei einer normalen Becherhülse der maximale Innendurchmesser etwa 39 mm und der Saugstutzen etwa einen Innendurchmesser von 26 mm besitzt.

Das erfindungsgemäße Zitzengummi sowohl für einen Einraum- als auch für einen Zweiraumbecher hat den Vorteil, daß die Vorteile eines Rundkopfes erhalten werden, so daß die Gefahr des Auftretens von Leckluft selbst bei ungünstigsten Zitzenstellungen und Euterformen vermieden werden kann. Dies wird umsomehr erreicht, als es gemäß der Erfindung ermöglicht wird, einen Rundkopf mit besonders kleinem maximalen Durchmesser herzustellen. Besonders vorteilhaft ist es jedoch, daß trotz der Ausnutzung der Vorteile eines Rundkopfes die Anpassungsfähigkeit an verschieden dicke und verschieden lange Zitzen wesentlich verbessert ist. Dadurch, daß die Möglichkeit geschaffen wird, daß sich der maximale Außendurchmesser des Kopfteils vergrößern kann, wenn Zitzen mit verschiedener Dicke in den Kopfteil eingeführt werden, wird erreicht, daß auch bei dickeren Zitzen praktisch kein größerer Druck auf die Zitze ausgeübt wird als bei dünneren Zitzen. Dies ist äußerst wichtig für die Bereitschaft des Tieres, die Milch überhaupt abzugeben. Diese Vorteile werden erreicht, obgleich das Kopfteil besonders klein und die Kopfhöhe sehr gering ausgebildet werden kann, so daß sich das Zitzegummi auch für äußerst kurze Zitzen eignet.

Diese Vorteile werden in besonderem Maße dann erreicht, wenn das erste Federgelenk am Übergang des sich verjüngenden Teils des Kopfteils in den Schlauchstutzen angeordnet ist.

In diesem letzten Falle wird zweckmäßigerweise der Halterand unmittelbar unterhalb des ersten Federgelenkes mit dem Schlauchstutzen verbunden. Hierdurch wird erreicht, daß die Länge möglichst klein gehalten wird, über die die Zitze gegen den Schlauchstutzen anliegt, ohne daß auf die Zitze eine Massagebewegung des Schlauchstutzens ausgeübt wird, was in einem solchen Bereich nicht der Fall ist, in dem der Schlauchstutzen wesentlich verstärkt und praktisch starr ist.

Vorzugsweise wird das Kopfteil weiterhin derart ausgestaltet, daß in einem Axialschnitt der Winkel zwischen der ersten Verbindungslinie zwischen dem ersten und zweiten Federgelenk einerseits und einer zweiten Verbindungslinie zwischen dem Innenrand der Einführöffnung und dem zweiten Federgelenk andererseits kleiner oder gleich 90° ist. Wird dieser Winkel überschritten, so ergibt sich einerseits der Nachteil, daß die Höhe des Kopfteils größer als erwünscht wird, und daß andererseits die Wandung sich in um so größerem Maße in bezug auf eine axial wirkende Kraft als praktisch steif erweist, als sie eine konusförmige Fläche mit spitzem Winkel in bezug auf die Längsachse bildet. Aus diesem Grunde ist auch vorzugsweise der Winkel zwischen der zweiten Verbindungslinie und einer zu der Längsachse senkrechten Querebene kleiner oder gleich 45° gewählt. Als besonders zweckmäßig hat sich eine Ausführungsform erwiesen, bei der der Krümmungsradius der Innenwand beim Übergang des sich verjüngenden Teils des Kopfteils in den Schlauchstutzen zwischen 1/5 und 1/2 des Durchmessers des Schlauchstutzens ist. Dies trägt dazu bei, daß die Kopfhöhe des Kopfteils möglichst klein ausgebildet werden kann und andererseits die Zitze in einem möglichst geringen Abstand von der Einführöffnung für die Zitze bereits unterstützt wird. Gemäß einem vorzugsweisen Ausführungsbeispiel liegt der Krümmungsradius zwischen 5 und 10 mm.

Zur Verbesserung der Abdichtung der Dichtlippe des Kopfteils werden ein oder mehrere Dichtrippen konzentrisch zu der Einführöffnung um diese herum auf der Außenseite des Kopfteils vorgesehen.

Weiterhin ist es dann, wenn der Halterand zum Übergreifen der Melkbecherhülse in einem Axialschnitt winkelförmig mit zwei Schenkeln ausgebildet ist, von denen der das freie Ende aufweisende erste Schenkel gegen die Außenseite der Melkbecherhülse zur Anlage kommt, vorteilhaft die Ausbildung derart zu treffen, daß der zweite Schenkel derart flexibel ausgebildet ist, daß der Kopfteil aufgrund einer zwischen der Außenseite und dem Zwischenraum zwischen Melkbecherhülse und Saugstutzen auftretenden, auf den zweiten Schenkel wirkenden Druckdifferenz in Axialrichtung gegen die Melkbecherhülse bewegbar ist. Dies trägt erheblich zur Stimulation des Tieres bei, da bei jedem Pulsationszyklus die Melkbecherhülse in Längsrichtung relativ zu der Zitze bewegt wird. Besonders vorteilhaft ist diese Auf-Ab-Bewegung, wenn bei vier Zitzen jeweils zwei Melkbecher im Gegentakt geschaltet sind, so daß sich praktisch an den beiden Zitzenpaaren eine gegensinnige Schaukelbewegung ergibt, die die von Hand ausgeführte Bewegung beim Handmelken simuliert.

Um einen Durchschlag des Zitzengummihalterandes beim Aufschlagen auf einen Gegenstand aber auch allein bereits aufgrund der Auf- und Abwärtsbewegung der Melkbecherhülse während des Melkzyklus zu vermeiden, wird der Innendurchmesser des Halterandes von dem freien Ende des Halterandes ausgehend vorzugsweise derart zunehmend ausgebildet, daß der im montierten Zustand den obersten Rand der Melkbecherhülse übergreifende Teil im unmontierten Zustand einen Innendurchmesser aufweist, der größer oder gleich dem Außendurchmesser des Melkbecherhülsenrandes ist. Zusätzlich hierzu ist es zweckmäßig, den den obersten Melkbecherhülsenrand übergreifenden Teil noch verstärkt auszubilden.

Im folgenden soll die Erfindung näher anhand von in der Zeichnung dargestellten vorzugsweisen Ausführungsbeispielen erläutert werden. In der Zeichnung zeigen :

Figur 1  Einen Axialschnitt durch eine erste Ausführungsform eines erfindungsgemäßen Zitzengummis, das auf eine Melkbecherhülse aufgesetzt ist,

Figur 2  das in Fig. 1 gezeigte Zitzengummi, in das eine Zitze eingeführt ist, während im linken Teil der Figur in gestrichelten Linien noch der Kopfteil im unbelasteten Zustand entsprechend der Figur 1 eingezeichnet ist,

Figur 3  einen Axialschnitt durch eine weitere Ausführungsform eines erfindungsgemäßen Zitzengummis, das an eine schiefhängende Zitze angesetzt ist,

Figur 4  einen Axialschnitt durch eine weitere Ausführungsform eines erfindungsgemäßen Zitzengummis,

Figur 5 einen Axialschnitt durch eine weitere Ausführungsform eines erfindungsgemäßen Zitzengummis für einen Einraumbecher, und

Figur 6 einen Axialschnitt durch noch eine weitere Ausführungsform eines erfindungsgemäßen Zitzengummis.

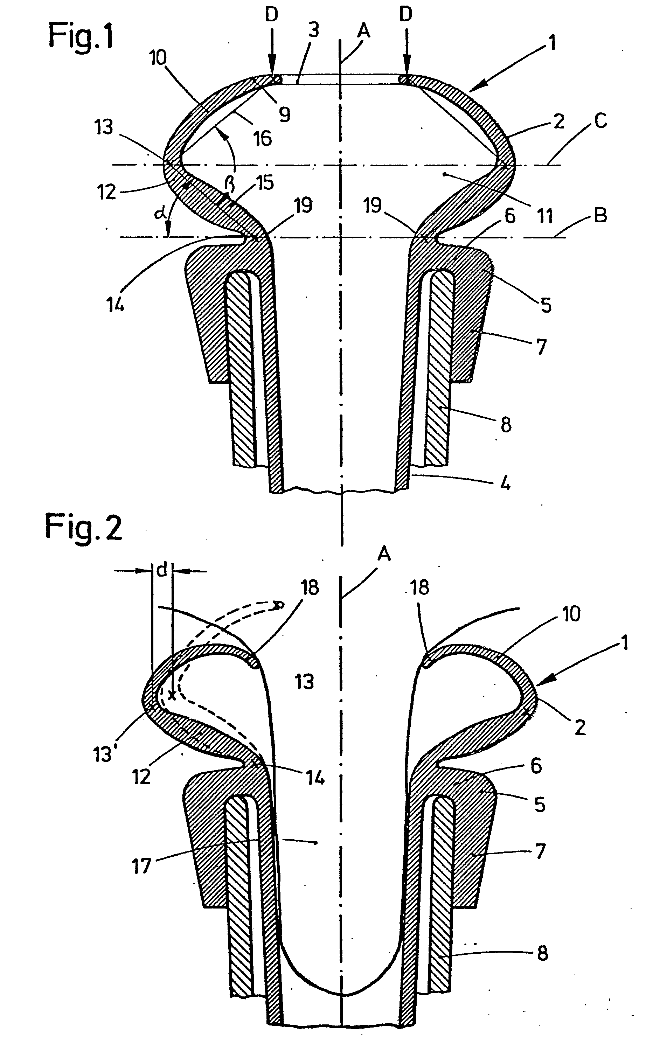

In den Figuren 1 und 2 ist ein um die Längsachse A rotationssymmetrisches, allgemein mit 1 bezeichnetes Zitzengummi gezeigt. Das Zitzengummi bildet ein Zitzengummi für einen Zweiraumbecher und besteht im wesentlichen aus einem Kopfteil 2, an dessen oberen Ende eine Einführöffnung 3 für eine Zitze ausgebildet ist, einem sich an den Kopfteil 2 anschließenden Saugstutzen 4, der zylindrisch oder leicht konisch ausgebildet ist, sowie einen Halterand 5, der im vorliegenden Ausführungsbeispiel winkelförmig ausgebildet ist und aus einem ersten mit dem Saugstutzen 4 verbundenen Schenkel 6 und einem zweiten gegen die Außenseite eines Melkbechers 8 anliegenden Schenkels 7 besteht.

Der Kopfteil 2 weist einen oberen Kopfteil 9 auf, der von einer elastischen Lippe 10, in der die Einführöffnung 3 ausgebildet ist, umschlossen wird und die sich von der Einführöffnung 3 ausgehend bogenförmig nach den Seiten abfallend bis zu einem maximalen Außendurchmesser in der Querebene C erstreckt. Die Lippe 10 umschließt dabei von der Einführöffnung 3 ausgehend einen sich in Richtung der Längsachse A fortschreitend radial erweiternden Raum. Im unteren Teil 11 des Kopfteils wird dieser durch eine sich an die Lippe 10 anschließenden Wandteil 12 gebildet, der derart ausgebildet ist, daß sich der Innenraum des Kopfteils von einem Maximaldurchmesser in Höhe der Ebene C fortschreitend in Richtung der Längsachse A wieder verjüngt, bis er praktisch in Höhe der Querebene B in den Saugstutzen 4 übergeht.

Die den Kopfteil 2 bildende wandung ist nun derart ausgestaltet, daß sich bei einem axialen Druck auf die Einführöffnung 3 des Kopfteils, wie durch die Pfeile D angedeutet ist, ein zweites Federgelenk (13) in der Querebene C, d. h. in der durch den maximalen Umfang des Kopfteiles 2 gelegten, zu der Längsachse A senkrechten Ebene, sowie in der Querebene B, beim Übergang des Kopfteiles 2 in den Schlauchstutzen 4 ein erstes Federgelenk 14 gebildet werden. Dies kann etwa dadurch geschehen, daß die Wandung des Kopfteiles in den entsprechenden Ebenen entsprechend geformt bzw. das für die Wandung verwandte Material entsprechend gewählt wird. Mit dem Ausdruck Federgelenk soll zum Ausdruck gebracht werden, daß um diesen Punkt im Axialschnitt gesehen (in Wirklichkeit handelt es sich bei den Federgelenken ja jeweils um ringförmige Flächen) eine gegenseitige Verschwenkung der angrenzenden Wandteile ähnlich wie bei einem Scharnier auftritt, daß bei dieser Verschwenkung jedoch gleichzeitig wie bei bei einer Feder Momente in dem Drehpunkt auftreten. Der Wandteil 12, der zwischen dem ersten (14) und dem zweiten Federgelenk 13 liegt, ist zweckmäßig derart ausgebildet, daß bei einer Verschwenkung dieses Wandteiles um das zweite Federgelenk 14 keine Verkürzung des Abstandes zwischen dem ersten (14) und zweiten Federgelenk 13 auftritt, was etwa durch ein Zusammenfallen des Wandteiles 12 bewirkt werden könnte. Um dies zu verhindern, muß das Wandteil 12 eine entsprechende Steifigkeit aufweisen.

Der Winkel α, den die Verbindungslinie 15 im entspannten Zustand zwischen dem ersten und zweiten Federgelenk 14 bzw. 13 mit der Querebene B bildet, sollte möglichst nicht größer als 45° sein, da sich bei Winkeln über 45° der praktisch eine Konusfläche bildende Wandteil 12 zunehmend derart versteift, daß auch bei zunehmendem Axialdruck auf die Einführöffnung 3 keine Verschwenkung des Wandteiles 12 mehr um das erste Federgelenk 14 herum möglich ist.

Der Winkel β zwischen der Verbindungslinie 15 und der das zweite Federgelenk 13 mit dem Innenrand der Einführöffnung 3 verbindenden Mittellinie 16 sollte im entspannten Zustand möglichst nicht größer als 90° gewählt werden. Zum einen gilt auch für die elastische Lippe 10, die groß gesehen gleichfalls eine konische Fläche bildet, daß sich die Lippe zunehmend schwerer nach einwärts abbiegen läßt, wenn der halbe Konuswinkel weniger als 45° beträgt. Zum anderen würde ein Winkel β größer als 90°, bei dem zwangsläufig unter der Voraussetzung, daß der Winkel α kleiner gleich 45° ist, die Verbindungslinie 16 einen größeren Winkel als 45° mit der Querebene C einschließen würde, eine unnötige Vergrößerung der Höhe des Kopfteils 1 (d. h. Verlängerung in Richtung der Längsachse A) bedeuten, ohne daß dadurch durch den steileren Verlauf der elastischen Lippe 10 wesentliche zusätzliche Vorteile in bezug auf die Anpassung des Kopfteils an schief stehende Zitzen oder ungünstige Euterausbildungen erreicht würden.

In Fig. 2 ist gezeigt, wie sich der Kopfteil 2 des Zitzengummis verformt, wenn eine Zitze 17 eingeführt wird, die dicker als die Einführöffnung 3 ist. Hierbei werden die der Einführöffnung 3 benachbarten Bereiche 18 der elastischen Lippe 10 nach einwärts und abwärts gebogen. Gleichzeitig wird hierbei die elastische Lippe 10 um das zweite Federgelenk 13 verschwenkt. Da hierbei gleichzeitig eine in axialer Richtung wirkende Kraft an dem Federgelenk 13 angreift, wird dieses um das erste Federgelenk 14 derart verschwenkt, daß das zweite Federgelenk in die in Fig. 2 mit 13′ gezeigte Lage gelangt. Aufgrund der Verschwenkung des Wandteiles 12 um das erste Federgelenk 14 wird somit der maximale Außendurchmesser des Kopfteiles 2 vergrößert. Wie aus Fig. 2 zu ersehen ist, hat sich das zweite Federgelenk 13 um die Strecke d radial nach außen bis in die Lage des Federgelenks 13′ verlagert. Insgesamt vergrößert sich also der maximale Durchmesser des Kopfteiles um die Länge 2 d. In entsprechendem Maße wird somit auch die Einführöffnung 3 für die Zitze aufgeweitet, so daß eine erhebliche Entlastung des Druckes stattfindet, der von der elastischen Lippe 10 auf die Zitze ausgeübt wird.

Wie oben ausgeführt wurde, sollte der Winkel α im entspannten Zustand eine maximale Größe von 45° nicht überschreiten, da ansonsten die Kräfte, die ausgeübt werden müssen, um überhaupt eine Verschwenkung des Wandteiles 12 um das zweite Federgelenk 14 zu erreichen, zu hoch sind. Um aber auch bei einem kleinen Winkel α einen möglichst großen Betrag der radialen Längenveränderung d zu erreichen, sollte demnach die Länge der Verbindungslinie 15 zwischen dem ersten und dem zweiten Federgelenk möglichst groß sein. Dies kann bei möglichst kleinem maximalen Außendurchmesser des Kopfteils dadurch erreicht werden, daß das erste Federgelenk 14 möglichst weit von dem zweiten Federgelenk aus gesehen in Richtung auf den Saugstutzen 4 verlagert wird. Im optimalen Falle sollte deshalb das erste Federgelenk in Höhe des Übergangs des Kopfteils in den Saugstutzen 4 angeordnet sein. Dieser Übergang wird gemäß dem in den Figuren 1 und 2 gezeigten Ausführungsbeispiel verhältnismäßig abrupt ausgebildet, so daß erreicht wird, daß der mittlere Durchmesser des ersten Federgelenks kleiner als der maximale Innendurchmesser der Melkbecherhülse 8 wird. Als mittlerer Durchmesser wird hierbei das arithmetische Mittel zwischen dem Außen- und Innendurchmesser des Kopfteils in Höhe des ersten Federgelenks 14 angesehen. Unter verhältnismäßig abruptem Übergang zwischen der Innenwandung des Kopfteils und der Innenwandung des Saugstutzens 4 wird hierbei ein Übergang verstanden, dessen Krümmungsradius zwischen 1/5 und 1/2 des Durchmessers des Saugstutzens liegt. Gemäß einem vorzugsweisen Ausführungsbeispiel liegt der Krümmungsradius des eben genannten Übergangsbereichs 19 zwischen 5 und 10 mm.

Durch den Halterand 5 und den Schenkel 6, der mit dem Saugstutzen 4 verbunden ist, tritt am Übergang des Halterandes in den Saugstutzen eine gewisse Versteifung des Saugstutzens 4 ein. Erst in dem Teil des Saugstutzens, der unterhalb des Ansatzes liegt, wird eine Massage der Zitze erzielt. Um den Abschnitt, in dem keine Massage auf die Zitze ausgeübt wird, obwohl diese durch den Saugstutzen abgestützt wird, möglichst klein zu halten, wird der Halterand 5 unmittelbar unterhalb des ersten Federgelenks 14 an dem Saugstutzen 4 angesetzt.

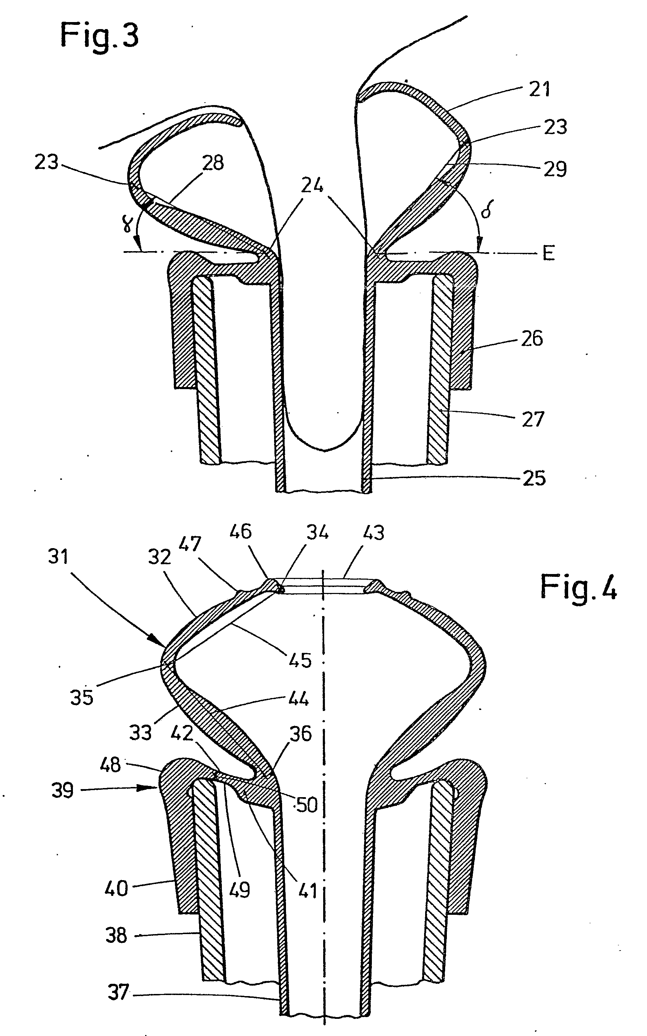

In Fig. 3 ist gezeigt, wie mit dem erfindungsgemäßen Zitzengummi gleichzeitig die Haftung und Verhinderung des Auftretens von Leckluft verbessert wird. Mit 21 ist das Oberteil eines Zitzengummis bezeichnet, das eng mit dem Saugstutzen 25 verbunden ist. An dem Saugstutzen 25 ist ein Halterand 26 angebracht, der die Melkbecherhülse 27 übergreift. In das Zitzengummi ist eine schräg von dem Euter wegstehende Zitze eingeführt. Wie aus Fig. 3 zu ersehen ist, hängt das Euter auf der linken Seite der Zitze weiter herab als auf der rechten Seite. Dementsprechend kommt der linke Teil in Fig. 3 des Oberteils 21 eher zur Anlage an dem Euter als der rechte Teil. Trotzdem wird auch in diesem Falle eine gute Haftung ermöglicht, was dadurch erreicht wird, daß das gesamte Kopfteil 21 an sich in gewissem Grade gegenüber der Becherhülse 27 und dem Saugstutzen 25 kippbar ist. Wie aus Fig. 3 zu ersehen ist, ist die Ebene, in der an sich das zweite Federgelenk 23 liegt, gegenüber der Querebene E, die senkrecht auf der Längsachse des Saugstutzens 25 steht, gekippt. Dies wird ermöglicht, indem der Winkel γ zwischen der Querebene E und der Verbindungslinie 28 zwischen dem zweiten Federgelenk 23 und dem ersten Federgelenk 24 auf der linken Seite gegenüber der Ausgangsstellung des Kopfteils 21 verkleinert wird, während ein entsprechender Winkel δ auf der rechten Seite gegenüber der Ausgangsstellung vergrößert wird. Dies wird ermöglicht durch die Verschwenkbarkeit des Kopfteiles um das erste Federgelenk 24.

Bei der in Fig. 4 gezeigten Ausführungform ist das allgemein mit 31 bezeichnete Kopfteil aus einer den oberen Teil umschließenden elastischen Lippe 32 und einem den unteren Teil des Kopfteils umschließenden Wandteil 33 gebildet. Dieser untere Wandteil 33 geht in den Saugstutzen 37 über. Die elastische Lippe 32 umschließt die Öffnung 43. Ein zweite Federgelenk 35 ist in Höhe des maximalen Außendurchmessers des Kopfteils gebildet, während ein erstes Federgelenk 36 beim Übergang des Wandteils 33 in den Saugstutzen 37 gebildet ist. Bei diesem Ausführungsbeispiel schließt die Verbindungslinie 44 zwischen dem ersten und dem zweiten Federgelenk 36 bzw. 35 einen Winkel mit einer nicht gezeigten zur Längsachse des Kopfteils senkrecht verlaufenden Querebene ein, der etwa 45° ist. Die Verbindungslinie 45 zwischen dem zweiten Federgelenk 35 und dem Innenrand 34 der Öffnung 43 schließt dagegen einen kleineren Winkel als 45° mit dieser Querebene ein. Dementsprechend ist die Länge der Verbindungslinie 44 etwas größer als die Länge der Verbindungslinie 45. Um die Einführöffnung 43 herum sind auf der Außenseite der elastischen Lippe 32 eine erste und eine zweite Dichtrippe 46 bzw. 47 ausgebildet. Diese können gegebenenfalls auch gegen den Euterboden abdichten. Die hier gezeigte Anordnung weist bei axialem Einwärtsdruck auf den Rand 34 der Einführöffnung 43 einen besonders starken Entlastungseffekt des radialen Druckes auf die Zitze auf.

In Fig. 4 besteht der unmittelbar unterhalb des ersten Federgelenks 36 an dem Saugstutzen 37 angesetzte allgemein mit 39 bezeichnete Halterand aus einem ersten gegen die Außenseite der Melkbecherhülse 38 anliegenden Schenkel 40 sowie eine diesen ersten Schenkel mit dem Saugstutzen 37 verbindenden zweiten Schenkel 41. Um eine bessere Haltbarkeit des Halterandes 39 zu gewährleisten, ist in Höhe des Übergangspunktes von einem ersten zu einem zweiten Schenkel 40 bzw. 41 eine über dem obersten Rand der Melkbecherhülse 38 liegende Verdickung 48 ausgebildet.

Bei dem gezeigten Ausführungsbeispiel ist der mittlere Durchmesser des ersten Federgelenks 36 wesentlich kleiner als der Innendurchmesser der Melkbecherhülse 38. Infolge dieser Ausbildung wirkt auf die Fläche 42 des zweiten Schenkels 41 des Halterandes im Betrieb dauernd Atmosphärendruck und diese Fläche 42 liegt der Fläche 49 an dem zweiten Schenkel 41 gegenüber, auf die der Pulsatordruck in dem Zwischenraum zwischen der Außenseite des Saugstutzens 37 und der Innenseite des Melkbechers 38 wirkt. Infolge der sich hierdurch ergebenden sich zyklisch ändernden und auf den zweiten Schenkel 41 wirkenden Druckdifferenz wird der zweite Schenkel 41 praktisch periodisch um das an dem inneren Rand der Melkbecherhülse 38 liegende dritte Federgelenk 50 im Uhrzeiger- und Gegenuhrzeigersinn verschwenkt. Dies bewirkt insgesamt, da das dritte Federgelenk ebenfalls wiederum ringförmig ausgebildet ist, eine relative Verschiebung des Kopfteils und des Saugstutzens des Zitzengummis in seiner axialen Richtung gegen die Melkbecherhülse 38. Werden die an die vier Zitzen gleichzeitig angesetzten Melkbecher im Wechseltakt betrieben, so bewirkt dies eine die Stimulation besonders stark erhöhende Schaukelbewegung jeweils der beiden Paare von Melkbechern gegeneinander am Euter.

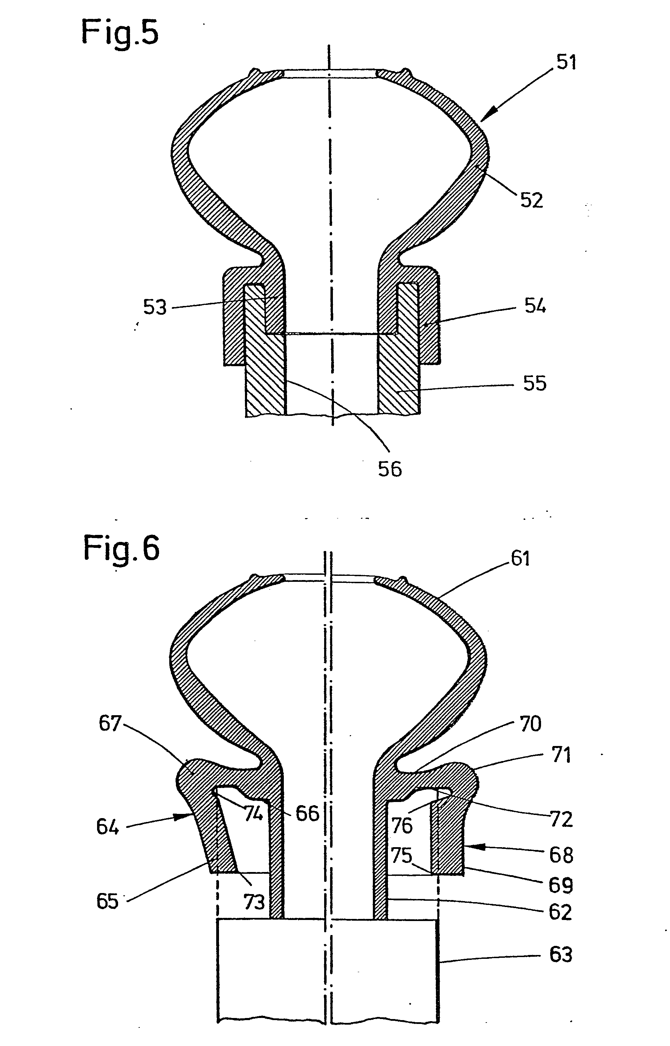

In Fig. 5 ist ein für einen Einraumbecher ausgebildetes Zitzengummi 51 gezeigt. Dieses Zitzengummi besteht im wesentlichen aus einem wie in den vorhergehenden Ausführungsbeispielen beschriebenen Kopfteil 52, das in diesem Falle jedoch nur in einen verhältnismäßig kurzen Schlauchstutzenteil 53 übergeht. An dem Schlauchstutzenteil 53 ist ebenfalls ein Halterand 54 angesetzt, der den oberen Rand einer Melkbecherhülse 55 übergreift. Der Schlauchstutzenteil 53 ist in eine entsprechende Aussparung auf der Innenseite des oberen Randes der Melkbecherhülse 55 eingebracht derart, daß die Innenseite des Schlauchstutzens eine durchgehende Fläche mit der übrigen Innenseite 56 der Melkbecherhülse 55 bilden. Die Innenseite der Melkbecherhülse bildet somit praktisch die Fortsetzung des Schlauchstutzens 53.

In Fig. 6 sind in einer Darstellung auf der linken und rechten Seite zwei unterschiedliche Ausführungsformen für jeweils den Halterand dargestellt. Wie in den vorhergehenden Ausführungsformen ist ein Kopfteil 61 mit einem Saugstutzen 62 verbunden, an dem die auf der linken Seite angeführte erste Ausführungsform eines Halterandes 64 bzw. die auf der rechten Seite dargestellte zweite Ausführungsform eines Halterandes 68 angesetzt sind. Im unteren Teil ist zur Verdeutlichung die Melkbecherhülse 63 dargestellt, auf die der jeweilige Halterand aufgeschoben werden muß. Der Halterand 64 besteht aus einem ersten Schenkel 65 und einem diesen ersten Schenkel mit dem Saugstutzen 62 verbindenden zweiten Schenkel 66. Am Übergang des ersten zum zweiten Schenkel ist eine Verdickung 67 ausgebildet, die ein Durchschlagen des Halterandes auf dem oberen Rand der Melkbecherhülse verhindern soll. Wie aus Fig. 6 zu ersehen ist, ist der erste Schenkel 65 derart ausgebildet, daß sein Innendurchmesser ausgehend von seinem äußeren freien Ende, an dem der Innendurchmesser kleiner als der Außendurchmesser der Melkbecherhülse 63 ist, zum oberen Ende 74 stetig derart zunimmt, daß der Innendurchmesser an diesem oberen Ende 74 größer oder höchstens gleich dem Außendurchmesser der Melkbecherhülse 63 ist. Dadurch wird erreicht, daß der Halterand gerade an dieser obersten Stelle 74, an der der Halterand auf der Oberseite der Melkbecherhülse 63 aufliegt, spannungsfrei ist, da ansonsten eine rasche Zerstörung des Halterandes gerade an diesem oberen Ende während des Betriebes eintreten würde.

Auf der rechten Seite der Fig. 6 ist ein zweiter Halterand 68 gezeigt, der in ähnlicher Weise aus einem ersten Schenkel 69 und einem diesen ersten Schenkel mit dem Saugstutzen 62 verbindenden zweiten Schenkel 70 besteht. Bei diesem Ausführungsbeispiel ist der Innendurchmesser des zweiten Schenkels 69 von einem unteren Punkt 75 bis zu einem oberen Punkt 76 gleich, jedoch kleiner als der Außendurchmesser der Melkbecherhülse 63 ausgebildet. Dieser Teil des Halterandes liegt somit im Betriebszustand unter Spannung gegen die Außenseite der Melkbecherhülse 63 an. Oberhalb des Punktes 76 und am Übergang des ersten in den zweiten Schenkel 69 bzw. 70 ist eine Auskehlung 72 vorgesehen, die einen größeren Innendurchmesser als der Außendurchmesser der Melkbecherhülse 63 aufweist. Aufgrund dieser Auskehlung 72 wird ebenfalls erreicht, daß der Halterand im Übergangsbereich zwischen dem ersten und zweiten Schenkel spannungsfrei ist. In diesem Übergangsbereich 71 ist der Halterand gleichfalls verdickt.

Das Zitzengummi wird vorzugsweise aus einem elastischen Material hergestellt. Besonders bewährt hat sich Silikongummi.

## Ansprüche

1. Zitzengummi (1) mit einem zu einer Längsachse (A) rotationssymmetrischen Kopfteil (2), der eine Einführungsöffnung (3) für die Zitze sowie einen Halterand (5) zum Übergreifen einer Melkbecherhülse (8) aufweist, wobei die den Innenraum des Kopfteils (2) umschließende Wandung derart ausgebildet ist, daß sich der Innenraum von der Einführöffnung (3) der Zitze in Richtung der Längsachse (A) fortschreitend zunächst radial erweitert und nach Erreichen eines maximalen Durchmessers wieder bis zu einem Übergang (19) in einen mit dem Kopfteil zusammenhängenden, leicht konischen oder zylindrischen, flexiblen Saugstutzen (4) hin verjüngt, wobei die Wand des Kopfteils (2) zwischen der Einführöffnung (3) und dem Übergang (19) zum Saugstutzen (4) einen versteiften Wandungsteil (12) und zwischen diesem versteiften Wandungsteil und dem Halterand (5) in Höhe einer zu der Längsachse (A) senkrechten Querebene (B) einen bei einer in Richtung der Längsachse (A) des Zitzengummis auf den Rand der Einführöffnung (3) für die Zitze wirkenden Kraft (D) flexibleren und als ein erstes Federgelenk (14) wirkendes Wandungsteil aufweist, dadurch gekennzeichnet, daß ein weiterer, bei einer in Richtung der Längsachse (A) des Zitzengummis auf den Rand der Einführöffnung (3) für die Zitze wirkenden Kraft (D) in Bezug auf den versteiften Wandungsteil (12) flexiblerer und als ein zweites Federgelenk (13) wirkender Wandungsteil etwa in Höhe des maximalen Außendurchmessers des Kopfteils vorgesehen ist, daß der versteifte Wandungsteil (12) in der sich hieran anschließenden, nach einwärts geneigten Wand des sich verjüngenden Abschnitts des Kopfteils zwischen dem ersten (14) und dem zweiten (13) Federgelenk ausgebildet ist, daß der versteifte Wandungsteil (12) bei einer in Richtung der Längsachse (A) des Zitzengummis auf den Rand der Einführöffnung (3) für die Zitze wirkenden Kraft (D) um das erste Federgelenk (14) als Hebel mit etwa gleichbleibender Länge unter Vergrößerung des Außendurchmessers des Kopfteils (2) verschwenkbar ist, daß die im Axialschnitt gesehen zwischen dem ersten (14) und zweiten (13) Federgelenk jeweils zwischen entsprechenden Punkten in der Wandungsmitte aufgespannte Verbindungslinie (15) im entspannten Zustand des Zitzengummis einen Winkel ($\alpha$) von kleiner oder gleich 45° mit der Querebene (B) einschließt und daß der mittlere Durchmesser des sich verjüngenden Kopfteils in Höhe des ersten Federgelenks (14) kleiner als der größte Innendurchmesser der Melkbecherhülse (8) ist.

2. Zitzengummi nach Anspruch 1, dadurch gekennzeichnet, daß das erste Federgelenk (14, 24, 36) am Übergang des sich verjüngenden Abschnitts des Kopfteils (2, 21, 31, 51) in dem Schlauchstutzen (4, 25, 37) angeordnet ist.

3. Zitzengummi nach Anspruch 2, dadurch gekennzeichnet, daß der Halterand, (5, 26, 39, 54) unmittelbar unterhalb des ersten Federgelenks (14, 24, 36) mit dem Schlauchstutzen (4, 25, 37 ; 53) verbunden ist.

4. Zitzengummi nach einem der Ansprüche 1 bis 3, dadurch gekennzeichnet, daß die Wand (10, 12) des sich erweiternden und des sich verjüngenden Abschnitts des Kopfteils (2) jeweils im Axiallängsschnitt nach auswärts bogenförmig gekrümmt ist.

5. Zitzengummi nach einem der Ansprüche 1 bis 3, dadurch gekennzeichnet, daß die Wand (32, 33) des sich erweiternden und des sich verjüngenden Abschnitts des Kopfteils (31) jeweils im Axialschnitt jeweils im wesentlichen konisch ausgebildet ist.

6. Zitzengummi nach einem der Ansprüche 1 bis 5, dadurch gekennzeichnet, daß in einem Axialschnitt der Winkel zwischen der ersten Verbindungslinie (15, 44) zwischen dem ersten und dem zweiten Federgelenk (13, 14 ; 23, 24 ; 35, 36) einerseits und einer zweiten Verbindungslinie (16, 45) zwischen dem Innenrand der Einführöffnung (3, 43) und dem zweiten Federgelenk (13, 23, 35) andererseits kleiner oder gleich 90° ist.

7. Zitzengummi nach Anspruch 6, dadurch gekennzeichnet, daß der Winkel zwischen der zweiten Verbindungslinie (16, 45) und einer zu der Längsachse senkrechten Querebene (C) kleiner oder gleich 45° ist.

8. Zitzengummi nach einem der Ansprüche 1 bis 7, dadurch gekennzeichnet, daß der Krümmungsradius der Innenwand (19) beim Übergang des sich verjüngenden Teils des Kopfteils (2) in den Schlauchstutzen (4) zwischen 1/5 und 1/2 des Durchmessers des Schlauchstutzens ist.

9. Zitzengummi nach Anspruch 8, dadurch gekennzeichnet, daß der Krümmungsradius zwischen 5 und 10 mm beträgt.

10. Zitzengummi nach einem der Ansprüche 1 bis 9, dadurch gekennzeichnet, daß eine oder mehrere Dichtrippen (46, 47) konzentrisch zu der Einführöffnung (43) um diese herum auf der Außenseite des Kopfteils ausgebildet sind.

11. Zitzengummi nach einem der Ansprüche 1 bis 10, wobei der Halterand zum Übergreifen der Melkbecherhülse in einem Axialschnitt winkelförmig mit zwei Schenkeln ausgebildet ist, von denen der das freie Ende aufweisende erste Schenkel gegen die Außenseite der Melkbecherhülse, zur Anlage kommt, dadurch gekennzeichnet, daß der zweite Schenkel (41) derart flexibel ausgebildet ist, daß der Kopfteil (31) aufgrund einer zwischen der Außenseite und dem Zwischenraum zwischen Melkbecherhülse (38) und Saugstutzen (37) auftretenden, auf den zweiten Schenkel (41) wirkenden Druckdifferenz in Axialrichtung gegen die Melkbecherhülse (38) bewegbar ist.

12. Zitzengummi nach einem der Ansprüche 1 bis 11, dadurch gekennzeichnet, daß der Innendurchmesser des Halterandes (64) von dem freien Ende des Halterandes ausgehend derart zunehmend ausgebildet ist, daß der im montierten Zustand den obersten Rand der Melkbecherhülse (63) übergreifende Teil im unmontierten Zustand einen Innendurchmesser aufweist, der größer oder gleich dem Außendurchmesser des Melkbechers des Melkbecherhülsenrandes ist.

13. Zitzengummi nach einem der Ansprüche 1 bis 12, dadurch gekennzeichnet, daß der den obersten Melkbecherhülsenrand übergreifende Teil (48, 67, 71) verstärkt ausgebildet ist.

## Claims

1. Rubber teat piece (1) with a head part (2) which is rotationally symmetrical in relation to a longitudinal axis (A) and which has an insertion orifice (3) for the teat and a retaining edge (5) for engaging over a milking-pail sleeve (8), the wall surrounding the interior of the head part (2) being designed in such a way that the interior first progressively widens radially from the teat insertion orifice (3) in the direction of the longitudinal axis (A) and, after a maximum diameter has been reached, narrows again up to a transition (19) into a slightly conical or cylindrical flexible suction piece (4) continuous with the head part, the wall of the head part (2) having, between the insertion orifice (3) and the transition (19) to the suction piece (4), a stiffened wall part (12) and, between this stiffened wall part and the retaining edge (5), at the height of a transverse plane (B) perpendicular to the longitudinal axis (A), a wall part which is more flexible under a force (D), acting in the direction of the longitudinal axis (A) of the rubber teat piece on the edge of the insertion orifice (3) for the teat, and which acts as a first spring joint (14), characterised in that a further wall part, which is more flexible in relation to the stiffened wall part (12) under a force (D) acting in the direction of the longitudinal axis (A) of the rubber teat piece on the edge of the insertion orifice (3) for the teat and which acts as a second spring joint (13) is provided approximately at the height of the maximum outside diameter of the head part, in that the stiffened wall part (12) is formed in the adjoining inwardly inclined wall of the narrowing portion of the head part between the first spring joint (14) and the second spring joint (13), in that the stiffened wall part (12) is pivotable about the first spring joint (14) as a lever with an approximately constant length, while increasing the outside diameter of the head part (2), under a force (D) acting in the direction of the longitudinal axis (A) of the rubber teat piece on the edge of the insertion orifice (3) for the teat, in that, when the rubber teat piece is in the unstressed condition, the connecting line (15), fixed, as seen in axial section, between the first spring joint (14) and the second spring joint (13), respectively between appropriate points in the centre of the wall, encloses an angle ($\alpha$) with the transverse plane (B) which is less than or equal to 45°, and in that the mean diameter of the narrowing head part at the height of the first spring joint (14) is less than the maximum inside diameter of the milking-pail sleeve (8).

2. Rubber teat piece according to Claim 1, characterised in that the first spring joint (14, 24, 36) is located at the transition of the narrowing portion of the head part (2, 21, 31, 51) into the hose connection piece (4, 25, 37).

3. Rubber teat piece according to Claim 2, characterised in that the retaining edge (5, 26, 39, 54) is connected to the hose connection piece (4, 25, 37, 53) immediately underneath the first spring joint (14, 24, 36).

4. Rubber teat piece according to one of Claims 1 to 3, characterised in that the wall (10, 12) of the widening portion and of the narrowing portion of the head part (2) is respectively curved arcuately outwards in axial longitudinal section.

5. Rubber teat piece according to one of Claims 1 to 3, characterised in that the wall (32, 33) of the widening portion and of the narrowing portion of the head part (31) is respectively made essentially conical in axial section.

6. Rubber teat piece according to one of Claims 1 to 5, characterised in that in an axial section the angle between the first connecting line (15, 44) between the first and the second spring joint (13, 14 ; 23, 24 ; 35, 36), on the one hand, and a second connecting line (16, 45) between the inner edge of the insertion orifice (3, 43) and the second spring joint (13, 23, 35), on the other hand, is less than or equal to 90°.

7. Rubber teat piece according to Claim 6, characterised in that the angle between the second connecting line (16, 45) and a transverse plane (C) perpendicular to the longitudinal axis is less than or equal to 45°.

8. Rubber teat piece according to one of Claims 1 to 7, characterised in that the radius of curvature of the inner wall (19) at the transition of the narrowing part of the head part (2) into the hose connection piece (4) is between 1/5 and 1/2 of the diameter of the hose connection piece.

9. Rubber teat piece according to Claim 8, characterised in that the radius of curvature is between 5 and 10 mm.

10. Rubber teat piece according to one of Claims 1 to 9, characterised in that one or more sealing ribs (46, 47) are formed, concentrically to the insertion orifice (43), around the latter on the outside of the head part.

11. Rubber teat piece according to one of Claims 1 to 10, in which the retaining edge for engaging over the milking-pail sleeve is made angular in axial section, with two legs, of which the first leg having the free end comes to rest against the outside of the milking-pail sleeve, characterised in that the second leg (41) is made flexible in such a way that the head part (31) is moveable in an axial direction towards the milking-pail sleeve (38) as a result of a pressure difference arising between the outside and the interspace between the milking-pail sleeve (38) and the suction piece (37) and acting on the second leg (41).

12. Rubber teat piece according to one of Claims 1 to 11, characterised in that the inside diameter of the retaining edge (64) is designed to increase, starting from the free end of the retaining edge, in such a way that the part which, when assembled, engages over the topmost edge of the milking-pail sleeve (63) has, when not assembled, an inside diameter which is greater than or equal to the outside diameter of the edge of the milking-pail sleeve.

13. Rubber teat piece according to one of Claims 1 to 12, characterised in that the part (48, 67, 71) engaging over the topmost edge of the milking-pail sleeve is of reinforced design.

**Revendications**

1. Manchon trayeur (1) comportant une tête (2) ayant une symétrie de révolution par rapport à un axe longitudinal (A), qui présente une ouverture d'introduction (3) pour le pis ou le trayon, ainsi qu'une bordure de support (5) destinée à coiffer le col (8) d'un godet de trayeuse, la paroi entourant l'espace intérieur de la tête (2) étant formée de manière que l'espace intérieur s'élargit d'abord radialement de plus en plus dans la direction de l'axe longitudinal (A) puis, après être parvenue à un diamètre maximal, diminue à nouveau jusqu'à un point de transition (19) avec un tube ou un raccord d'aspiration flexible cylindrique ou légèrement conique (4) solidaire de la tête, la paroi de la tête (2) comportant, entre l'ouverture d'entrée (3) et le point de transition (19) avec le raccord d'aspiration (4), une partie de paroi renforcée ou plus rigide (12) et entre cette dernière et la bordure de support, au niveau d'un plan de section (B) perpendiculaire à l'axe longitudinal (A) une partie de paroi constituant une première articulation élastique (14) et qui, sous l'action d'une force (D) s'exerçant dans la direction de l'axe longitudinal (A) du capuchon sur le bord de l'ouverture d'introduction (3) du trayon est plus flexible, caractérisé en ce qu'une autre partie de paroi constituant une seconde articulation élastique (13) est prévue approximativement au niveau du diamètre extérieur maximal de la partie de tête qui, sous l'action d'une force (D) agissant dans la direction de l'axe longitudinal (A) du capuchon sur le bord de l'ouverture d'introduction (3) du trayon est plus flexible que la partie de paroi renforcée (12), en ce que la partie de paroi renforcée ou plus rigide (12) est formée dans la paroi inclinée vers l'intérieur, se raccordant à celle-ci, de la section rétrécissante de la tête comprise entre la première articulation élastique (14) et la seconde (13), en ce que la partie de paroi renforcée ou plus rigide (12) peut, sous l'action d'une force (D) agissant sur l'ouverture d'entrée (3) du trayon dans la direction de l'axe longitudinal (A) du manchon pivoter autour de la première articulation élastique comme levier ayant une longueur approximativement constante en agrandissant le diamètre extérieur de la tête (2), en ce que, vue en coupe axiale, dans l'état détendu du manchon trayeur, la droite de liaison s'étendant entre des points appropriés du milieu de la paroi entre la première et la seconde articulations élastiques (14, 13), forme un angle (α) plus petit que ou égal à 45° avec le plan de coupe (B) et en ce que le diamètre moyen de la partie de tête rétrécissante est, au niveau de la première articulation élastique (14), plus petit que le plus grand diamètre extérieur du col (8) du godet de la trayeuse.

2. Manchon trayeur selon la revendication 1, caractérisé en ce que la première articulation élastique (14, 24, 36) est placée à la transition entre la section rétrécissante de la tête (2, 21, 31, 51) et le raccord ou le tube d'aspiration (4, 25, 37).

3. Manchon trayeur selon la revendication 2, caractérisé en ce que la bordure de support (5, 26, 39, 54) est reliée aux raccords (4, 25, 37, 53) immédiatement sous la première articulation élastique (14, 24, 36).

4. Manchon trayeur selon l'une quelconque des revendications 1 à 3, caractérisé en ce que la paroi (10, 12) de la section rétrécissante élargissante de la tête (2) est, en coupe longitudinale axiale, bombée vers l'extérieur en forme d'arc.

5. Manchon trayeur selon l'une quelconque des revendications 1 à 3, caractérisé en ce que la paroi (32, 33) de la section rétrécissante et élargissante de la tête (31) présente, en coupe axiale, une forme essentiellement conique.

6. Manchon trayeur selon l'une quelconque des revendications 1 à 5, caractérisé en ce que, en coupe axiale, l'angle compris entre la première ligne de liaison (15, 44) entre la première et la seconde articulations élastiques (13, 14 ; 23, 24 ; 35, 36), d'une part, et une seconde ligne de liaison (16, 45) entre le bord intérieur de l'ouverture d'introduction (3, 43) et la seconde articulation élastique (13, 23, 35), d'autre part, est inférieur ou égal à 90°.

7. Manchon trayeur selon la revendication 6, caractérisé en ce que l'angle compris entre la seconde ligne de liaison (16, 45) et un plan transversal (C) perpendiculaire à l'axe longitudinal est inférieur ou égal à 45°.

8. Manchon trayeur selon l'une quelconque des revendications 1 à 7, caractérisé en ce que le rayon de courbure de la paroi intérieure (19), à la transition de la partie rétrécissante de la tête (2) et du raccord ou du tube d'aspiration (4), est compris entre 1/5 et 1/2 du diamètre dudit raccord.

9. Manchon trayeur selon la revendication 8, caractérisé en ce que le rayon de courbure est compris entre 5 et 10 mm.

10. Manchon trayeur selon l'une quelconque des revendications 1 à 9, caractérisé en ce qu'une ou plusieurs nervures d'étanchéité (46, 47) sont disposées concentriquement autour de l'ouverture d'introduction (43), sur la face extérieure de la tête.

11. Manchon trayeur selon l'une quelconque des revendications 1 à 10, dans lequel la bordure de support est pourvue, pour coiffer le col du godet de la trayeuse, en coupe axiale, de deux branches formant un certain angle, et où la première branche, comportant l'extrémité libre, vient s'appliquer contre la face extérieure du col du godet de la trayeuse, caractérisé en ce que la seconde branche (41) a une flexibilité telle que la tête (31) peut se déplacer axialement entre le col (38) du godet de la trayeuse par suite de la différence de pressions s'exerçant sur la seconde branche (41) et se développant entre la face extérieure et l'intervalle entre le col (38) du godet de la trayeuse et le raccord d'aspiration (37).

12. Manchon trayeur selon l'une quelconque des revendications 1 à 11, caractérisé en ce que le diamètre extérieur de la bordure de support (64) augmente à partir de son extrémité libre de telle sorte que quand il est monté, la partie coiffant le bord supérieur du col de la trayeuse (63) a, à l'état non monté, un diamètre intérieur qui est supérieur ou égal au diamètre extérieur du bord du col du godet de la trayeuse.

13. Manchon trayeur selon l'une quelconque des revendications 1 à 12, caractérisé en ce que la partie (48, 67, 71) coiffant le bord supérieur du col du godet de la trayeuse est renforcée.

Fig.1

Fig.2

Fig.3

21
23
29
23
28
24
δ
γ
E
26
27
25

31
32 47
46
34
43
Fig.4
35
45
33 42
44
36
48
50
39
40
49
41
38
37

## Fig.5

## Fig.6